# EUROPEAN PATENT APPLICATION

(11) **EP 2 330 775 A1**
(43) Date of publication of application: **08.06.2011**
(21) Application number: 09290906.8
(22) Date of filing: 03.12.2009
(51) Int. Cl.: H04L 12/28, H04L 12/26

(54) **Device and method for diagnosing a home network device**

(71) Applicant: Alcatel Lucent, 75008 Paris (FR)
(72) Inventor: Vermoesen, Luc, 2880 Bornem (BE); Acke, Willem, 2820 Rijmenam (BE)
(74) Representative: BiiP cvba

(57) **Abstract**

The present invention is related to a diagnostic device for diagnosing a device under test in a local computer network. The diagnostic device comprises an interface over which communication with the device under test can be established and a software diagnostics component capable of monitoring the device under test.

## Description

### Field of the Invention

The present invention generally relates to the field of devices and methods for diagnosing a communication device in a local network.

### Background of the Invention

Nowadays Home Networks (HN) are growing in number of interconnected devices, using different types of physical layer technology and data link layer technology. Management of these devices is mainly organised via communication over an IP protocol at the network layer (Layer3 in the OSI model of computer networking) that aggregates the different low layer technologies. This network layer is below also referred to as the IP layer.

In case of a communication or configuration problem occurring in these below-IP-layers, the IP layers lose communication and management of these devices over IP is blocked, which is problematic for remote management. A fallback solution for managing the devices could be via terminal communication directly with the unreachable device, so that the device in the home network can be reset, restored or reprogrammed. From an operator point of view, these scenarios are costly since they require the intervention of an on-site technician.

Some practical issues in case of sub-IP layer problems are given now. In a home network comprising power line controllers (PLC), these PLCs may have different configured network parameters or data encryption parameters, which gives rise to different Virtual Private LAN Services (VPLSs) in the home network. In case the PLC is not directly connected to the home gateway or a PC with a remote management interface, the network information is hidden and cannot be obtained. Due to incorrect setting of (possibly multiple) DHCP server(s) in the home network, a DHCP enabled device can obtain a wrong IP address resulting in wrong IP subnet information. The home network device becomes not reachable in the network and therefore cannot be managed any longer via IP.
Another scenario leading to problems occurs when the home user incorrectly programs a static IP address of a home network device, as this makes the device unreachable via IP. In case of WiFi, a wrongly configured Service Set Identifier (SSID) can lead to non-reachability. The same can happen with an incorrect Bluetooth configuration.

Since the home device is unreachable for remote management in the cases above, the operator asks the home user to factory reset the device. Optionally he may further ask the home user to reconfigure the device with appropriate parameters.
Alternatively, the operator asks the home user to hook up the device to a PC where diagnostics software is used to interface with the device in order to determine the error and possibly to reprogram the device so that it becomes reachable again in the home network.

In both cases described, a user who has to perform these operations needs to be quite knowledgeable on the Layer2 and/or Layer3 of the different technologies at hand, since knowledge of different configuration parameters and/or connection schemes is required. The problem becomes more cumbersome since home network devices (legacy and new ones), from different types, manufacturers, etc... have different management interfaces (with respect to the type, data tables, parameters etc...).

Consequently, there is a need for a way of diagnosing and managing devices in a home network, whereby actual intervention by the user is avoided.

### Aims of the invention

The present invention aims to provide a method and device for diagnosing a device under test in a local computer network.

### Summary

The present invention relates to a diagnostic device for diagnosing a device under test in a local computer network. The diagnostic device comprises an interface over which communication with the device under test can be established and comprises a software diagnostics component capable of monitoring the device under test.

The above solution indeed achieves the aim of the invention. The diagnostic device establishes a connection with the device to be diagnosed via a diagnostic interface. The diagnostic device is further equipped with means for monitoring the device under diagnosis that also contains the intelligence to perform a diagnosis. This means is referred to as the diagnostics component and is implemented in software.

In a most preferred embodiment the diagnostic device of the invention comprises a software diagnostics component that is also arranged for managing the device under diagnosis. With managing is meant that it is capable of controlling and configuring the network device in the local network that is being diagnosed.

In a preferred embodiment the diagnostic device further comprises a management interface for communication with an operator. This management interface is optionally part of the software diagnostic component. Providing such a management interface allows exchanging diagnostic information to and from an operator's diagnostic platform. In one embodiment the communication with the operator's platform is performed via the TR-069 protocol.

In another preferred embodiment the diagnostic interface over which the communication with the device under diagnosis takes place, is software switchable, meaning that the interface can be switched on and off by means of a command in software.

In an advantageous embodiment the diagnostic interface of the diagnostic device is capable of isolating the device under test from the local network. This yields the advantage that the diagnosis can be made without any interference from the configuration of any other device in the network.

In another embodiment of the invention the diagnostic interface is arranged for wireless communication, so that short range wireless communication with the device under test (diagnosis) is possible (e.g. WiFi or Bluetooth). Alternatively the diagnostic interface is an Ethernet interface.

In another preferred embodiment the software diagnostic component is capable of executing scriptable logic. In this way the diagnostic device is capable of handling different troubleshooting scenarios.

The invention also relates to a network device for serving a local computer network comprising a diagnostic device as previously described. Integrating the diagnostic device into another network device constitutes in general a much more cost effective solution than a stand-alone implementation.

In another aspect the invention relates to a method for diagnosing a device under test comprised in a local computer network. The method comprising the steps of :
- establishing a connection between said device under test and a diagnostic device, and
- monitoring said device under test with a software diagnostic component of said diagnostic device.

In a most preferred embodiment the method further comprises the step of configuring the device under test according to the result of the monitoring step.

The proposed method can advantageously be applied in local computer networks comprising at least one power line controller and/or wireless device.

### Brief Description of the Drawings

Fig. 1 illustrates an embodiment of the solution according to the present invention.

Fig. 2 illustrates a first example wherein the invention is applied.

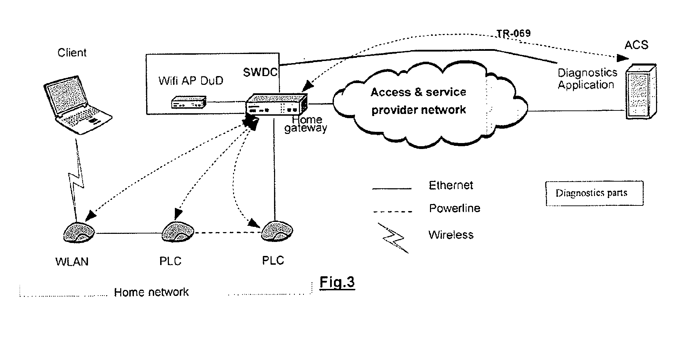

Fig. 3 illustrates a second example.

### Detailed Description of the Invention

The present invention discloses a diagnostic device capable of diagnosing a communication device in a local computer network. The device comprises a diagnostic interface such that the device under test can be hooked up to this interface and diagnosed directly from this interface. In a most preferred embodiment the device under test can also be managed or configured directly from the diagnostic device. During this phase the interface is preferably isolated from the home network itself so that any constellation or interface configuration on the diagnostic device can occur as well as any constellation, interface configuration or device configuration on the device to be diagnosed.

In order to monitor and preferably also to manage (configure) the device to be diagnosed, the device according to the invention comprises a software diagnostics component. In an advantageous embodiment this software diagnostics component is provided with an interface to the operator, so that all diagnostics information can be bi-directionally tunneled between the operator's diagnostics platform and the SW diagnostics component. This allows for the operator to have control over the device to be diagnosed. In case the diagnostic device is part of a home gateway, it also becomes possible to configure the home gateway (HGW) interface at sub-IP and IP layers.

The hardware interface over which communication with the device under test can be established, can be an Ethernet interface. In an advantageous alternative solution it can be an interface suitable for USB, WiFi, Bluetooth or another short range wireless communication protocol.

The diagnostic device is preferably software switchable, so that it can be put in diagnostics mode when needed. By activating the interface into this diagnostic mode, the software diagnostics component can communicate with the device under diagnosis and monitor it. Optionally, the home gateway, on this port, can place itself in direct communication with the device without affecting other devices in the home network.

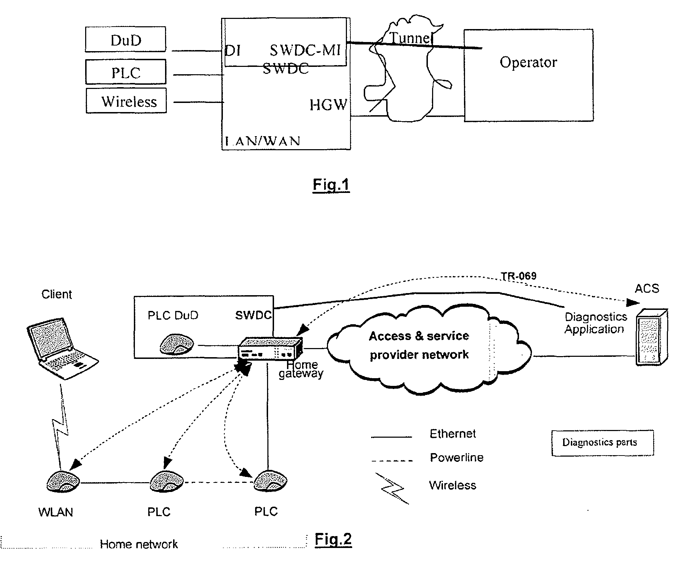

The diagnostics component (SWDC) handling the diagnostic interface (DI) of the diagnostic device preferably has a management interface towards the operator via TR069 or another management protocol so that a remote operator can obtain real-time data from the device and set or configure the diagnostics component in such a way that it can communicate with and (re-)configure the device under diagnosis. Via this SW diagnostics component (SWDC) Management Interface (SWDC-MI), a tunnel is provided towards the operator's diagnostics platform. Fig.1 illustrates this for an embodiment wherein the diagnostic device is integrated in an home gateway (HGW). The local network in Fig.1 comprises, apart from the device under diagnosis (DuD), power line controllers (PLC) and some wireless devices.

Once the device under diagnosis is reconfigured and ready for the home network, the SW diagnostic device can be switched off and the device to be diagnosed can optionally be disconnected from the home gateway and be used in the home network. The physical interface that was used for the diagnostics can be re-used in the home network once the diagnostics mode is removed from the physical interface.

As already mentioned the diagnostic device of the invention can be integrated in another network device like a home gateway, a service gateway or device, a PC, ... Alternatively it can be a small stand alone device. A dedicated interface for diagnostics is of course more expensive as compared to a cost-effective home gateway.

When switched in diagnostics mode, the software diagnostic component uses the interface provided in the diagnostic device for communicating with the device to be diagnosed. Therefore it is able to monitor all traffic and capable of constructing any Layer2 packet that would be necessary for trouble-shooting when diagnosing a device under test.

The interface for communication with the device under test in the local network is preferably capable of isolating any traffic from the device under test and the interface from rest of the home network (and possibly from the home gateway, if the diagnostic device is integrated in such network device). Via the interface any IP subnet configuration can be performed. Advantageously, the interface can be used for snooping traffic to and from the device to be diagnosed so that the type of traffic generated by the device can be observed. Further a specific ARP handling can be provided to learn about the IP/MAC relation in the device in question.

The management interface that is preferably provided in the diagnostic device is arranged for assuring any management interface tunnelling to/from a remote device to/from the device under diagnosis. Possible protocols that can be envisaged, include but are not limited to telnet, Simple Network Management Protocol (SNMP), CLI, Java interfaces, web services, ...The management interface advantageously includes features like network address translation (NAT) and/or port address translation (PAT) to tunnel the traffic to/from a remote device.

In a preferred embodiment of the invention the software diagnostic component is capable of executing scriptable logic to handle different troubleshooting scenarios. Once the device under diagnosis is identified, scripts can be downloaded or installed from the diagnostics platform. In this way the diversity of the different management interfaces can be tackled.

To further illustrate the invention, two example are now discussed wherein the invention is applied.

In a first example, illustrated in Fig.2, PLC devices are described with wrongly configured network ID or encryption data. Via diagnostics software for PLC plugs (e.g. spirit-config-tool), the network ID setting of the directly attached PLC plug can be obtained. The PLC device that constitutes the device under diagnosis was initially connected to the home network, but for some reason cannot be reached anymore from the home gateway device (HGW). Consequently, it is not presented in the topology for the home network. In a next step the software diagnostics component is activated in the HGW on the diagnostic interface. The PLC device under diagnosis gets connected to diagnostic interface. Several options then exist. The software diagnostic component may diagnose the PLC under test automatically, i.e. it performs an autodetect operation and, preferably, also an autorepair. Another option is that the diagnostic component tunnels all data link layer/network layer information monitored on the diagnostic interface. This allows the diagnostic device to remotely monitor the data link layer/network layer information as to allow the remote operator to determine the cause of the problem. Alternatively, the diagnostic component implements diagnostics PLC commands in order to interrogate PLC under diagnosis about its configuration and forwards information to diagnostics application (e.g. network settings, like MAC address, IP address, network identifiers, etc ... ). In this example, it uses SCP protocol to do so. This could be downloaded from the diagnostics platform. As a further option, the software diagnostics component or the diagnostics application initiates corrective diagnostics commands to reconfigure the PLC being diagnosed, e.g. via the PLC's Secure Configuration protocol (SCP). Next the diagnostic device is deactivated, thus releasing the diagnostic mode on the diagnostic interface. The PLC that was diagnosed can now be connected into the home network and will actually appear in the home network because it now has the proper network ID configured.

The second example relates to a wrong static IP address in a wireless access point and a WiFi 'hide SSID' setting. The WiFi access point (AP) device to be diagnosed was initially connected to a home network but for some reason is not reachable anymore from the home gateway and therefore not presented in the topology from the home network. As in the previous example, the diagnostic device is then activated so that communication with the device under diagnosis becomes possible via the diagnostic interface of the diagnostic device. The WiFi AP device under test is then connected to the diagnostic interface. Upon power up, the WiFi AP device normally transmits gratuitous arps indicating its MAC and IP address. From this information already, wrong IP address configuration can be determined. Alternatively, since it is in isolated and diagnostic mode, the diagnostic component sends out a broadcast ping as to learn the IP address of the WiFi AP device to be diagnosed. The diagnostic device then compares the Wifi AP device IP subnet with the home network IP subnet and detects different subnets. The diagnostic device sets the diagnostic interface into the subnet of the device under diagnosis so that is can manage that device via IP (albeit a different IP subnet then the home network IP subnet). Then the device of the invention can initiate corrective configuration commands to configure either the static address of the WiFi access point into the subnet of the home network or set the WiFi access point in DHCP mode so that a correct IP address is obtained. Once this is done, the diagnostic device reconfigures the IP subnet of the diagnostic interface into the IP subnet of the home network. For example, upon request from the diagnostics application at the AutoConfiguration Server (ACS) side, the SSID setting 'hidden' can be removed or the SSID itself can be reconfigured to match the SSID settings used in the home network. Finally, the diagnostic device is deactivated, thus releasing the diagnostic mode on the diagnostic interface. The WiFi AP device that was diagnosed can now be connected into the home network and will indeed appear in the home network, because it has the proper network ID configured.

Thanks to the present invention, devices can be attached to a diagnostic device, more in particular to an interface provided thereon, for diagnostic purposes. The diagnosis can be performed without intervention of the end user. In case also a management interface is provided, the invention enables an operator to interface with the device as if an technician would be dispatched over to the home itself. Transfer or displacement costs are avoided and faster problem diagnosis and solutions are realised.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Diagnostic device for diagnosing a device under test in a local computer network, comprising an interface over which communication with said device under test can be established and further comprising a software diagnostics component capable of monitoring said device under test.

2. Diagnostic device as in claim 1, wherein said software diagnostics component is arranged for managing said device under test.

3. Diagnostic device as in claim 1 or 2, further comprising a management interface for communication with an operator.

4. Diagnostics device as in claim 3, wherein said management interface is arranged for communication via a TR-069 protocol.

5. Diagnostic device as in any of claims 1 to 4, wherein said interface over which communication with said device under test can be established is software switchable.

6. Diagnostic device as in any claims 1 to 5, said interface over which communication with said device under test can be established being arranged for isolating said device under test from said local network.

7. Diagnostic device as in any of claims 1 to 6, wherein said interface over which communication with said device under test can be established is arranged for wireless communication.

8. Diagnostic device as in any of claims 1 to 7, wherein said software diagnostics component is arranged for executing scriptable logic.

9. Diagnostic device as in any of claims 1 to 4, further comprising

10. Network device for serving a local computer network comprising a diagnostic device as in any of the previous claims.

11. Method for diagnosing a device under test comprised in a local computer network, comprising the steps of :
- establishing a connection between said device under test and a diagnostic device, and
- monitoring said device under test with a software diagnostic component of said diagnostic device.

12. Method for diagnosing a device under test as in claim 11, further comprising the step of configuring said device under test according to the result of the monitoring step.

13. Method for diagnosing a device as in claim 11 or 12, whereby said local computer network comprises a power line controller.
